# EUROPÄISCHE PATENTSCHRIFT

(11) **EP 2 125 423 B1**
(45) Veröffentlichungstag und Bekanntmachung des Hinweises auf die Patenterteilung: **24.04.2013**
(21) Anmeldenummer: 07857059.5
(22) Anmeldetag: 21.12.2007
(51) Int. Cl.: B60N 2/22, B60N 2/235

(54) **SITZVERSTELLER, INSBESONDERE RÜCKENLEHNENNEIGUNGSVERSTELLER**
SEAT ADJUSTER, PARTICULARLY BACKREST INCLINATION ADJUSTER
DISPOSITIF D'AJUSTEMENT DE SIÈGE, EN PARTICULIER DISPOSITIF D'AJUSTEMENT D'INCLINAISON DE DOSSIER

(30) Priorität: 28.12.2006 DE 102006062461; 02.04.2007 DE 102007016167; 29.06.2007 DE 102007030427
(43) Veröffentlichungstag der Anmeldung: 02.12.2009
(60) Teilanmeldung: 12007241.8
(73) Patentinhaber: Johnson Controls GmbH, 51399 Burscheid (DE)
(72) Erfinder: MILDT, Helmut, R., 51789 Lindlar (DE); ALBERS, Franz, 51109 Köln (DE); IHNKEN, Andreas, 42799 Leichlingen (DE)
(74) Vertreter: Wolff, Felix
(86) Internationale Anmeldenummer: PCT/EP2007/011346
(87) Internationale Veröffentlichungsnummer: WO 2008/080587

(56) Entgegenhaltungen:
- EP-A- 1 164 051
- DE-A1- 10 235 177
- DE-U1- 29 903 957
- FR-A- 2 770 467
- GB-A- 2 436 121

## Beschreibung

Die Erfindung betrifft eine Fondsitzanordnung mit einer Rückenlehne, die mindestens drei Segmente aufweist, bei der jedes Segment in seiner Neigung individuell verstellbar ist.

Rückenlehnenneigungsversteller sind aus dem Stand der Technik bekannt. Insbesondere wird auf das deutsche Patent DE 103 12 140 B4 verwiesen, das hiermit als Referenz eingeführt wird und somit als Teil der Offenbarung gilt. Diese Sitzversteller werden üblicherweise über laschenartige Beschlagteile an die seitlichen Träger des Sitzteils angesetzt und mit diesem verschraubt, vernietet oder verschweißt, wie es beispielsweise in der DE 101 14 393 oder der DE 102 53 242 dargestellt ist. Weiterer Stand der Technik sind die DE 102 35 177 A1, die FR 2 770 467, die DE 299 03 957 U1, die EP 1 164 051 A1 sowie die GB 2 436 121 A.

Es deshalb die Aufgabe der vorliegenden Erfindung eine verbesserte Fondsitzanordnung zur Verfügung zu stellen.

Gelöst wird die Aufgabe mit einer Fondsitzanordnung gemäß Patentanspruch 1. Vorteilhafte Ausführungsformen der Fondsitzanordnung sind in den Unteransprüchen 2 - 6 beansprucht.

Die Fonsitzanordnung weist einen Rückenlehnenneigungsversteller auf, mit dem die Neigung eines Segmentes einer Rücklehne relativ zu einem Sitzteil verstellbar ist. Vorzugsweise weist der Rückenlehnenneigungsversteller ein erstes Beschlagteil auf, das relativ zu einem zweiten Beschlagteil bewegbar und mit diesem verrastbar ist, wobei das zweite Beschlagteil an einem Rohrstück gelagert, insbesondere befestigt ist.

Mit diesem Rückenlehnenneigungsversteller ist es möglich, Rücklehnensegmente mit der Kraftfahrzeugkarosserie und nicht nur mit dem Sitzteil eines Kraftfahrzeuges zu verbinden. Dadurch ergeben sich für die Fondsitze neu Gestaltungsmöglichkeiten. Des Weiteren ist es möglich mit diesem Rückenlehnenneigungsversteller eine Fondsitzanordnung mit einer Rückenlehne zur Verfügung zu stellen, die mehrere Segmente aufweist, deren Neigung individuell einstellbar ist.

Bei dem Rückenlehnenneigungsversteller kann es sich um jeden dem Fachmann geläufigen Rückenlehnenneigungsversteller handeln. Vorzugsweise handelt es sich jedoch um einen Rückenlehnenneigungsversteller, wie er in dem deutschen Patent DE 103 12 140 B4 beschrieben ist, das hiermit als Referenz eingeführt wird und somit als Teil der Offenbarung gilt.

Dieser Rückenlehnenneigungsversteller weist vorzgsweise einen Beschlagteil auf, der mit einem Rohrstück verbunden ist. Ein Rohrstück im Sinne der Erfindung ist ein innen hohles langgestrecktes Bauteil beliebiger Länge mit einem beliebigen Querschnitt, wobei der Querschnitt vorzugsweise im Wesentlichen konstant ist. Der Querschnitt kann rund, oval oder vieleckig sein. Vorzugsweise ist das Rohrstück aus Stahl, Kunststoff und/oder einem Leichtmetall gefertigt.

Vorzugsweise werden beide Beschlagteile von dem Rohrstück durchdrungen. Besonders bevorzugt ist die Mittellängsachse des Rohrstücks auch die Drehachse der beiden Beschlagsteile.

Vorzugsweise ist ein Beschlagsteil mit dem Rohrstück fest verbunden. Der Beschlag kann mit dem Rohrstück stoff- form- und/oder kraftschlüssig verbunden sein. Das andere Beschlagteil dreht sich vorzugsweise um das Rohrstück.

Vorzugsweise ist das Rohstück durch den Beschlag hindurchgeführt und steht, besonders bevorzugt an mindestens einer, ganz besonders bevorzugt an beiden Seiten aus dem Beschlag hervor. Diese bevorzugte Ausführungsform erlaubt es weitere Bauteile, insbesondere rohrförmige Bauteile mit dem Rohrstück zu verbinden. Dabei werden diese Bauteile vorzugsweise in oder über das Rohstück gesteckt und dann mit diesem verbunden. Die weiteren Bauteile können jedoch auch stoßartig mit dem Rohrstück verbunden werden.

In einer weiteren bevorzugten Ausführungsform ist an dem Rohrstück ein Form- und/oder Kraftschlussmittel angeordnet, das mit einem komplementären Form- und/oder Kraftschlussmittel an dem Beschlag zusammenwirkt.

Vorzugsweise weist der Rückenlehnenneigungsversteller einen Beschlag auf, an dem ein Sitzgurt befestigbar ist. Diese bevorzugte Ausführungsform der vorliegenden Erfindung eignet sich insbesondere für sogenannte Gurtintegralsitze, bei dem der Sicherheitsgurt in den Kraftfahrzeugsitz integriert ist.

Erfindungsgemäß ist die Rückenlehne an zwei beabstandeten, quer zur Fahrzeugrichtung angeordneten Rohren gelagert. Diese erfindungsgemäße Ausführungsform der vorliegenden Erfindung hat den Vorteil, dass die Rückenlehne unabhängig von dem Fahrzeugsitz an der Karosserie des Kraftfahrzeuges montiert werden kann.

Erfindungsgemäß weist die Rückenlehne mehrere Segmente auf, die in ihrer Neigung individuell einstellbar sind. Besonders bevorzugt weisen die Segmente dafür jeweils einen Rückenlehnenneigungsversteller aufweisen, der mit einem der Rohre verbunden ist.

Als Rückenlehnenneigungsversteller eignet sich jeder dem Fachmann geläufige Rückenlehnenneigungsversteller. Vorzugsweise handelt es sich um den oben beschriebenen Rückenlehnenneigungsversteller.

Im folgenden werden die Erfindungen anhand der Figuren 1 - 6 erläutert. Diese Erläuterungen sind lediglich beispielhaft und schränken den allgemeinen Erfindungsgedanken nicht ein.

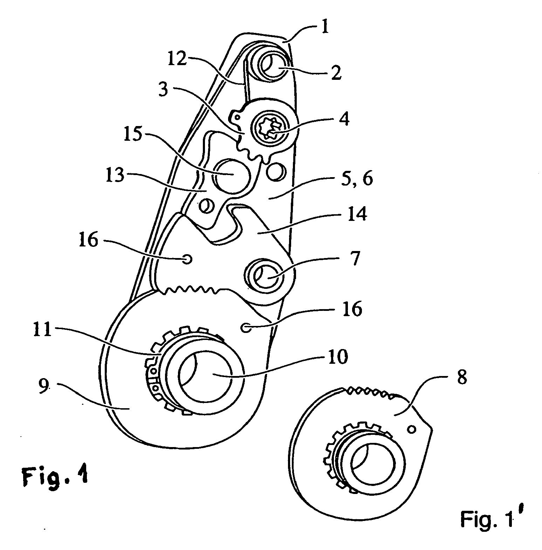

- Figur 1: zeigt einen Rückenlehnenneigungsversteller.
- Figuren 1' - 3: zeigen ein Details des Rückenlehnenverstellers gemäß Figur 1.
- Figuren 4 - 5: zeigen die erfindungsgemäße Sitzanordnung
- Figur 6: zeigt ein Detail der Sitzanordnung gemäß den Figuren 4 - 5

Figur 1 zeigt eine Ausführungsform eines Rückenlehenneigungsverstellers. Es handelt sich um einen Rastklinkenversteller mit einem rückenlehnenseitigen Beschlagteil 1 und einem fahrzeugseitigen Beschlagteil 9, welches mit einer Verzahnung zum Eingriff einer am rückenlehnenseitigen Beschlagteil 1 um einen Bolzen 7 drehbar angeordneten Rastklinke 14 versehen ist. Die Blechschichten der in Lagen aufgebauten Komponenten sind u. a. über Spannstifte 16 miteinander verbunden. Die Rastklinke 14 wird über einen Nocken 13 in Eingriff gehalten, der um einen Bolzen 15 drehbar ist und bei entsprechender Drehung auch ein Lösen der Rastklinke 14 bewirkt. Der Antrieb des Nockens 13 erfolgt über ein Zahnglied 3, welches auch wesentliche Teile einer den Nocken 13 spannenden Schenkelfeder 12 aufnimmt. Diese stützt sich mit einem Schenkel an einer Hülse 2 ab. Das Zahnglied 3 weist ferner eine verzahnte Ausnehmung 4 zur Aufnahme einer Übertragungsstange auf. Am Beschlagteil 1 können ferner bei hoher Belastung optional Verstärkungsplatten 5, 6 verbaut werden.

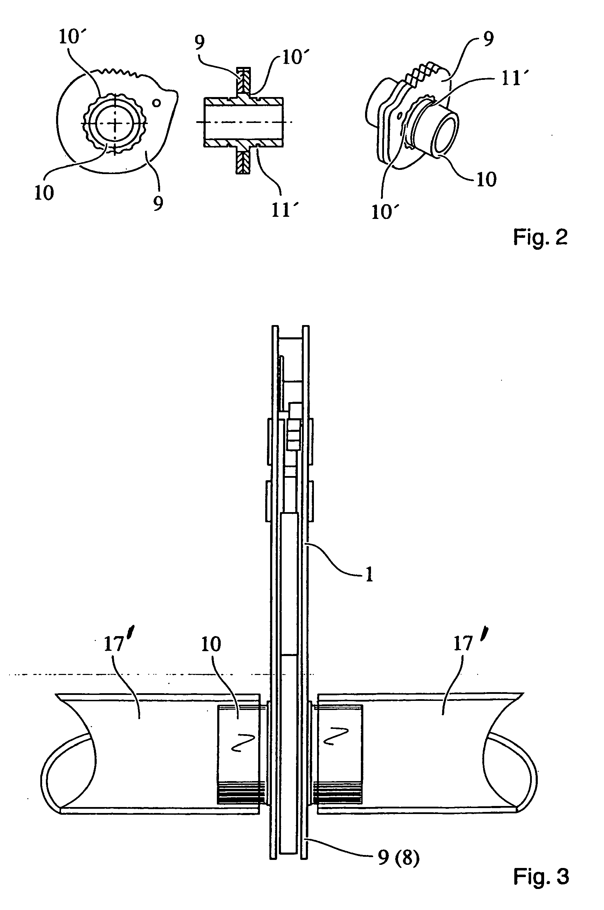

Durch das fahrzeugseitige Beschlagteil 9 ist ein Rohrstück 10 geführt, das mit einem außenverzahnten Ringfortsatz 10' versehen ist. Dieser ist drehfest in eine passende Innenverzahnung des Beschlagteils 9 eingepresst, was in Figur 2 dargestellt ist und dort beidseits über axial wirkende Sicherungsringe 11 gesichert, welche in Radialnuten 11' des Rohrstücks 10 eingesetzt werden.

Mit Bezugszeichen 8 in Fig. 1' ist gesondert ein sitzteilseitiges Beschlagteil zur Verwendung in Gurtintegralsitzen bezeichnet, welches anstelle des Beschlagteils 9 verbaut wird.

Auf das beidseits des Beschlagteils 9 (bzw. 8) auskragende Rohrstück 10 können, wie aus Fig. 3 ersichtlich, Rohrstrukturen 17' des Sitzteils aufgesteckt und mit diesem verbunden beispielsweise geschweißt werden, wobei die Rohrstrukturen 17' das Rohrstück 10 von außen überlappen. Grundsätzlich ist natürlich auch ein Einschieben durchmesserkleinerer Rohrstücke 17' oder auch ein stumpfes Verschweißen durchmesserähnlicher Rohrstücke 17' denkbar.

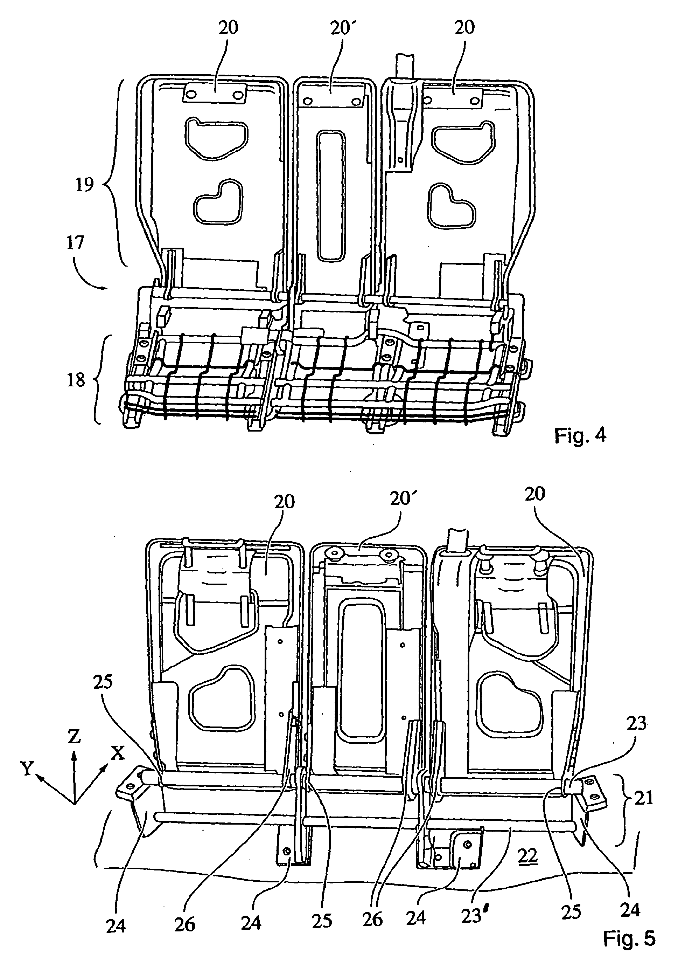

Die Figuren 4 und 5 stellen beispielhaft und schematisch eine erfindungsgemäße Fondsitzanordnung 17 mit dem Rückenlehnenneigungsversteller gemäß den Figuren 1 - 3 dar. Wie aus Figur 4 ersichtlich, besteht die als Rücksitzbank ausgebildete Fahrzeugsitz aus einem Sitzteil 18 und einer Rückenlehne 19, die in zwei seitliche 40%-Segmente 20 sowie ein mittleres 20%-Segment 20' gegliedert ist. Jedes Segment 20, 20' ist unabhängig vom benachbarten Segment 20, 20' in seiner Neigung einstellbar.

Wie aus Fig. 5 ersichtlich, ist die Rückenlehne 19 mittels einer quer im Fahrzeug angeordneten Konsole 21 mit dem Fahrzeugboden 22 verbunden, besitzt also keine unmittelbare Verbindung zum Sitzteil 18. Die Konsole 21 besteht aus zwei zueinander in Z-Richtung des Fahrzeugs beabstandeten, aber parallel verlaufenden, durchgängigen Querrohren 23, 23', die miteinander sowie mit dem Fahrzeugboden 22 über entlang der Quererstreckung (Y-Richtung des Fahrzeugs) verteilt angeordnete Halterungen 24 verbunden sind.

Jedem Segment 20, 20' ist an einer seiner Seiten ein Gelenk 25 zugeordnet, welches das obere Querrohr 23 drehbar umfasst. Die jeweils gegenüberliegende Seite jedes Segments 20, 20' ist mit einer Verstelleinrichtung 26 in Form eines Rastklinkenverstellers der in den Figuren 1 - 3 beschriebenen Art ausgestattet, welche die Segmente 20, 20' jeweils in der gewünschten Neigungsstellung arretieren.

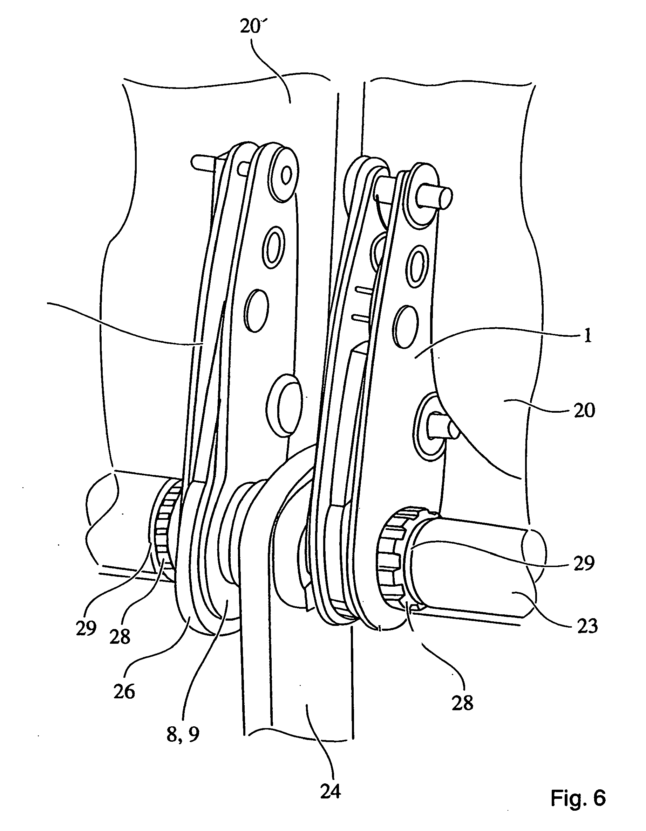

In Figur 6 sind zwei dieser Verstelleinrichtungen 26 in vergrößertem Ausschnitt dargestellt. Jede Verstelleinrichtung 26 besteht aus einem ersten Beschlagteil 1, welches fest mit dem zugeordneten Segment 20, 20' der Rückenlehne 19 verbunden ist, sowie einem zweiten Beschlagteil 8, 9 (nur in der linken Verstelleinrichtung 26 gezeigt), welches drehfest an der Konsole 21 befestigt ist. Beide Beschlagteile 1, 8, 9 werden dabei vom oberen Querrohr 23 der Konsole 21 durchdrungen. Dabei ist das der Rückenlehne zugeordnete Beschlagteil 1 frei gegenüber dem Querrohr schwenkbar, während das andere Beschlagteil 8, 9 mittels einer auf das Querrohr 23 aufgesteckten Keilverzahnung 28 formschlüssig mit diesem verbunden ist. Die Achse des Querrohrs 23 bildet dabei auch die Drehachse der Verstelleinrichtung 26 aus.

Die Keilverzahnung 28 ist am Außenumfang einer Hülse 29 ausgeformt, die ihrerseits drehfest, beispielsweise durch eine Schrumpfverbindung, auf dem Querrohr 23 angeordnet ist.

Die Entriegelung der jeweiligen Verstelleinrichtung 26 erfolgt jeweils durch einen Hebel, der am oberen Lehnenrand angeordnet ist.

### Bezugszeichenliste:

- 1: Beschlagteil (lehnenseitig)
- 2: Hülse
- 3: Zahnglied
- 4: Ausnehmung
- 5, 6: Verstärkungsplatte
- 7: Bolzen
- 8: Beschlagteil (sitzteilseitig)
- 9: Beschlagteil (sitzteilseitig)
- 10: Rohrstück
- 10': Ringfortsatz
- 11: Sicherungsring
- 11': Radialstück
- 12: Schenkelfeder
- 13: Nocken
- 14: Rastklinke
- 15: Bolzen
- 16: Spannstift
- 17: Fondsitzanordung
- 17': Rohrstücke
- 18: Sitzteil
- 19: Rückenlehne
- 20, 20': Segment (der Rückenlehne)
- 21: Konsole
- 22: Fahrzeugboden
- 23, 23': Querrohr
- 24: Halterung
- 25: Gelenk
- 26: Verstelleinrichtung
- 27: Hebel
- 28: Keilverzahnung
- 29: Hülse

## Patentansprüche

1. Fondsitzanordnung mit einer Rückenlehne (19), die mindestens drei Segmente (20, 20') aufweist, wobei jedes Segment (20, 20') in seiner Neigung mit einem Rückenlehnenneigungsversteller individuell verstellbar ist, **dadurch gekennzeichnet, dass** die Rückenlehne an zwei beabstandeten, quer zur Fahrzeugrichtung angeordneten Rohren (23, 23') gelagert ist und die Segmente (20, 20') jeweils einen Neigungsversteller aufweisen, der mit dem Rohr (23) verbunden ist.

2. Fondsitzanordnung nach Anspruch 1, wobei den Rückenlehnenneigungsversteller ein erstes Beschlagteil (1) aufweist, das relativ zu einem zweiten Beschlagteil (8, 9) bewegbar und mit diesem verrastbar ist, wobei das zweite Beschlagteil (8, 9) an einem Rohrstück (10) gelagert ist und das Rohrstück (10) an beiden Seiten aus dem Beschlag heraussteht und weitere Bauteile mit dem Rohrstück (10) verbunden sind.

3. Fondsitzanordnung nach Anspruch 2, **dadurch gekennzeichnet, dass** der Beschlag (8, 9) mit dem Rohrstück (10) fest verbunden ist.

4. Fondsitzanordnung nach einem der Ansprüche 2 oder 3, **dadurch gekennzeichnet, dass** das Rohstück (10) durch den Beschlag (8, 9) geführt ist.

5. Fondsitzanordnung nach einem der Ansprüche 2 - 4, **dadurch gekennzeichnet, dass** an dem Rohrstück (10) ein Form- und/oder Kraftschlussmittel (10') angeordnet ist, das mit einem komplementären Form- und/oder Kraftschlussmittel an dem Beschlag (8, 9) zusammenwirkt.

6. Fondsitzanordnung nach einem der voranstehenden Ansprüche, **dadurch gekennzeichnet, dass** an dem Beschlag (8) ein Sitzgurt befestigt ist.

## Claims

1. Rear seat arrangement with a backrest (19) which has at least three segments (20, 20'), wherein the inclination of each segment (20, 20') can be adjusted individually by a backrest inclination adjuster, **characterized in that** the backrest is mounted on two spaced-apart tubes (23, 23') arranged transversely with respect to the vehicle direction, and the segments (20, 20') each have an inclination adjuster which is connected to the tube (23).

2. Rear seat arrangement according to Claim 1, wherein the backrest inclination adjuster has a first fitting part (1) which is movable relative to a second fitting part (8, 9) and is latchable thereto, wherein the second fitting part (8, 9) is mounted on a tube section (10) and the tube section (10) protrudes on both sides out of the fitting and further components are connected to the tube section (10).

3. Rear seat arrangement according to Claim 2, **characterized in that** the fitting (8, 9) is fixedly connected to the tube section (10).

4. Rear seat arrangement according to either of Claims 2 and 3, **characterized in that** the tube section (10) is guided through the fitting (8, 9).

5. Rear seat arrangement according to one of Claims 2-4, **characterized in that** a form-fitting and/or frictional means (10') is arranged on the tube section (10) and interacts with a complementary form-fitting and/or frictional means on the fitting (8, 9).

6. Rear seat arrangement according to one of the preceding claims, **characterized in that** a seat belt is fastened to the fitting (8).

## Revendications

1. Agencement de siège arrière comprenant un dossier (19), qui présente au moins trois segments (20, 20'), chaque segment (20, 20') étant réglable individuellement dans son inclinaison avec un dispositif d'ajustement de l'inclinaison du dossier, **caractérisé en ce que** le dossier est supporté sur deux tubes (23, 23') espacés et disposés transversalement à la direction du véhicule, et les segments (20, 20') présentent chacun un dispositif d'ajustement de l'inclinaison qui est connecté au tube (23).

2. Agencement de siège arrière selon la revendication 1, dans lequel le dispositif d'ajustement de l'inclinaison du dossier présente une première partie de ferrure (1) qui peut être déplacée par rapport à une deuxième partie de ferrure (8, 9) et qui peut être encliquetée avec celle-ci, la deuxième partie de ferrure (8, 9) étant supportée sur une pièce tubulaire (10) et la pièce tubulaire (10) faisant saillie des deux côtés hors de la ferrure et d'autres composants étant connectés à la pièce tubulaire (10).

3. Agencement de siège arrière selon la revendication 2, **caractérisé en ce que** la ferrure (8, 9) est connectée fixement à la pièce tubulaire (10).

4. Agencement de siège arrière selon l'une quelconque des revendications 2 ou 3, **caractérisé en ce que** la pièce tubulaire (10) est guidée par la ferrure (8, 9).

5. Agencement de siège arrière selon l'une quelconque des revendications 2 à 4, **caractérisé en ce qu'**un moyen d'engagement par correspondance géométrique et/ou par force (10') est disposé sur la pièce tubulaire (10), lequel coopère avec un moyen d'engagement par correspondance géométrique et/ou par force complémentaire sur la ferrure (8, 9).

6. Agencement selon l'une quelconque des revendications précédentes, **caractérisé en ce qu'**une ceinture de siège est fixée sur la ferrure (8).
